# EUROPEAN PATENT APPLICATION

(11) **EP 2 518 588 A1**
(43) Date of publication of application: **31.10.2012**
(21) Application number: 11163761.7
(22) Date of filing: 26.04.2011
(51) Int. Cl.: G06F 3/01, G06F 3/048

(54) **Electronic device and method of controlling same**

(71) Applicant: Research In Motion Limited, Waterloo, ON N2L 3W8 (CA)
(72) Inventor: Snow, Christopher Harris, Waterloo Ontario N2L 3W8 (CA); Almalki, Nazih, Waterloo Ontario N2L 3W8 (CA); Oliver, Robert George, Owen Sound Ontario N4K 5A1 (CA)
(74) Representative: Fennell, Gareth Charles

(57) **Abstract**

A method includes determining a time between selections utilizing a touch-sensitive display, identifying a tactile feedback based on the time, and providing the tactile feedback in response to a subsequent selection utilizing the touch-sensitive display.

## Description

### FIELD OF TECHNOLOGY

The present disclosure relates to electronic devices including, but not limited to, electronic devices having displays and their control.

### BACKGROUND

Electronic devices, including portable electronic devices, have gained widespread use and may provide a variety of functions including, for example, telephonic, electronic messaging and other personal information manager (PIM) application functions. Portable electronic devices include several types of devices including mobile stations such as simple cellular telephones, smart telephones (smart phones), Personal Digital Assistants (PDAs), tablet computers, and laptop computers, with wireless network communications or near-field communications connectivity such as Bluetooth® capabilities.

Portable electronic devices such as PDAs, or tablet computers are generally intended for handheld use and ease of portability. Smaller devices are generally desirable for portability. A touch-sensitive display, also known as a touchscreen display, is particularly useful on handheld devices, which are small and may have limited space for user input and output. The information displayed on the display may be modified depending on the functions and operations being performed. Improvements in electronic devices with displays are desirable.

### SUMMARY

A method includes determining a time between selections utilizing a touch-sensitive display, identifying a tactile feedback based on the time, and providing the tactile feedback in response to a subsequent selection utilizing the touch-sensitive display. An electronic device includes a touch-sensitive display, at least one actuator arranged to impart force on the touch-sensitive display to provide at least one tactile feedback, and at least one processor operably coupled to the touch-sensitive display and to the actuator to determine time between selections on the touch-sensitive display, identify the tactile feedback based on the time, and provide the tactile feedback in response to a subsequent selection utilizing the touch-sensitive display.

### BRIEF DESCRIPTION OF THE DRAWINGS

FIG. 1 is a block diagram of a portable electronic device in accordance with an example embodiment.

FIG. 2 is a sectional side view of a portable electronic device with piezoelectric actuators in accordance with the disclosure.

FIG. 3 is a sectional side view of a portable electronic device with a depressed touch-sensitive display in accordance with the disclosure.

FIG. 4 is a sectional side view of a piezoelectric actuator in accordance with the disclosure.

FIG. 5 is a sectional side view of a piezoelectric actuator with a force sensor in accordance with the disclosure.

FIG. 6 is a block diagram including force sensors and actuators of the portable electronic device 100 in accordance with the disclosure.

FIG. 7 is a flow chart illustrating a method of providing tactile feedback in accordance with the disclosure.

FIG. 8 is a front view of a portable electronic device including selectable features displayed on the touch-sensitive display in accordance with the disclosure.

FIG. 9 through FIG. 11 illustrate graphs of tactile feedback in accordance with the disclosure.

### DETAILED DESCRIPTION

The following describes an electronic device and a method that includes determining a time between selections utilizing a touch-sensitive display, identifying a tactile feedback based on the time, and providing the tactile feedback in response to a subsequent selection utilizing the touch-sensitive display.

For simplicity and clarity of illustration, reference numerals may be repeated among the figures to indicate corresponding or analogous elements. Numerous details are set forth to provide an understanding of the embodiments described herein. The embodiments may be practiced without these details. In other instances, well-known methods, procedures, and components have not been described in detail to avoid obscuring the embodiments described. The description is not to be considered as limited to the scope of the embodiments described herein.

The disclosure generally relates to an electronic device, which is a portable electronic device in the embodiments described herein. Examples of portable electronic devices include mobile, or handheld, wireless communication devices such as pagers, cellular phones, cellular smart-phones, wireless organizers, personal digital assistants, wirelessly enabled notebook computers, tablet computers, mobile internet devices, and so forth. The portable electronic device may also be a portable electronic device without wireless communication capabilities, such as handheld electronic games, digital photograph albums, digital cameras, media players, e-book readers, and so forth.

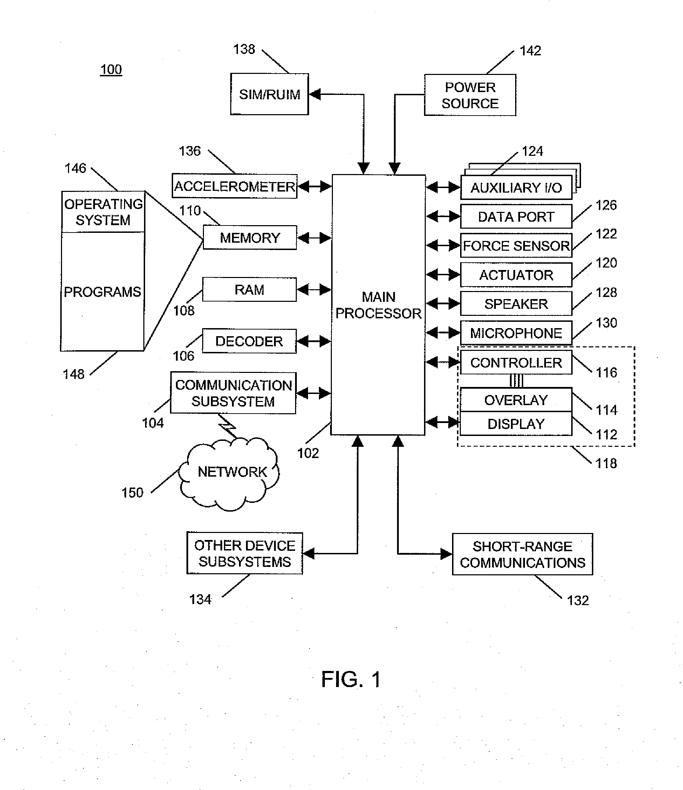

A block diagram of an example of a portable electronic device 100 is shown in FIG. 1. The portable electronic device 100 includes multiple components, such as a processor 102 that controls the overall operation of the portable electronic device 100. Communication functions, including data and voice communications, are performed through a communication subsystem 104. Data received by the portable electronic device 100 is decompressed and decrypted by a decoder 106. The communication subsystem 104 receives messages from and sends messages to a wireless network 150. The wireless network 150 may be any type of wireless network, including, but not limited to, data wireless networks, voice wireless networks, and networks that support both voice and data communications. A power source 142, such as one or more rechargeable batteries or a port to an external power supply, powers the portable electronic device 100.

The processor 102 interacts with other components, such as Random Access Memory (RAM) 108, memory 110, a display 112 with a touch-sensitive overlay 114 operably coupled to an electronic controller 116 that together comprise a touch-sensitive display 118, one or more actuators 120, one or more force sensors 122, an auxiliary input/output (I/O) subsystem 124, a data port 126, a speaker 128, a microphone 130, short-range communications 132, and other device subsystems 134. User-interaction with a graphical user interface is performed through the touch-sensitive overlay 114. The processor 102 interacts with the touch-sensitive overlay 114 via the electronic controller 116. Information, such as text, characters, symbols, images, icons, and other items that may be displayed or rendered on a portable electronic device, is displayed on the touch-sensitive display 118 via the processor 102. The processor 102 may interact with an accelerometer 136 that may be utilized to detect direction of gravitational forces or gravity-induced reaction forces.

To identify a subscriber for network access, the portable electronic device 100 uses a Subscriber Identity Module or a Removable User Identity Module (SIM/RUIM) card 138 for communication with a network, such as the wireless network 150. Alternatively, user identification information may be programmed into memory 110.

The portable electronic device 100 includes an operating system 146 and software programs or components 148 that are executed by the processor 102 and are typically stored in a persistent, updatable store such as the memory 110. Additional applications or programs may be loaded onto the portable electronic device 100 through the wireless network 150, the auxiliary I/O subsystem 124, the data port 126, the short-range communications subsystem 132, or any other suitable subsystem 134.

A received signal, such as a text message, an e-mail message, or web page download, is processed by the communication subsystem 104 and input to the processor 102. The processor 102 processes the received signal for output to the display 112 and/or to the auxiliary I/O subsystem 124. A subscriber may generate data items, for example e-mail messages, which may be transmitted over the wireless network 150 through the communication subsystem 104. For voice communications, the overall operation of the portable electronic device 100 is similar. The speaker 128 outputs audible information converted from electrical signals, and the microphone 130 converts audible information into electrical signals for processing.

The touch-sensitive display 118 may be any suitable touch-sensitive display, such as a capacitive, resistive, infrared, surface acoustic wave (SAW) touch-sensitive display, strain gauge, optical imaging, dispersive signal technology, acoustic pulse recognition, and so forth, as known in the art. A capacitive touch-sensitive display includes a capacitive touch-sensitive overlay 114. The overlay 114 may be an assembly of multiple layers in a stack including, for example, a substrate, a ground shield layer, a barrier layer, one or more capacitive touch sensor layers separated by a substrate or other barrier, and a cover. The capacitive touch sensor layers may be any suitable material, such as patterned indium tin oxide (ITO).

One or more touches, also known as touch contacts or touch events, may be detected by the touch-sensitive display 118. The processor 102 may determine attributes of the touch, including a location of a touch. Touch location data may include an area of contact or a single point of contact, such as a point at or near a center of the area of contact. A signal is provided to the controller 116 in response to detection of a touch. A touch may be detected from any suitable object, such as a finger, thumb, appendage, or other items, for example, a stylus, pen, or other pointer, depending on the nature of the touch-sensitive display 118. The controller 116 and/or the processor 102 may detect a touch by any suitable contact member on the touch-sensitive display 118. Multiple simultaneous touches may be detected.

One or more gestures may also be detected by the touch-sensitive display 118. A gesture, such as a swipe, also known as a flick, is a particular type of touch on a touch-sensitive display 118 and may begin at an origin point and continue to an end point. A gesture may be identified by attributes of the gesture, including the origin point, the end point, the distance traveled, the duration, the velocity, and the direction, for example. A gesture may be long or short in distance and/or duration. Two points of the gesture may be utilized to determine a direction of the gesture.

The actuator(s) 120 may be depressed by applying sufficient force to the touch-sensitive display 118 to overcome the actuation force of the actuator 120. The actuator 120 may be actuated by pressing anywhere on the touch-sensitive display 118. The actuator 120 may provide input to the processor 102 when actuated. Actuation of the actuator 120 may result in provision of tactile feedback. Other different types of actuators 120 may be utilized than those described herein. When force is applied, the touch-sensitive display 118 is depressible, pivotable, and/or movable. Tactile, or haptic, feedback may be provided by apparatus such as one or more actuators 120, such as piezoelectric devices, vibrator motors also known as vibramotors, ultrasonic devices, or other suitable apparatus.

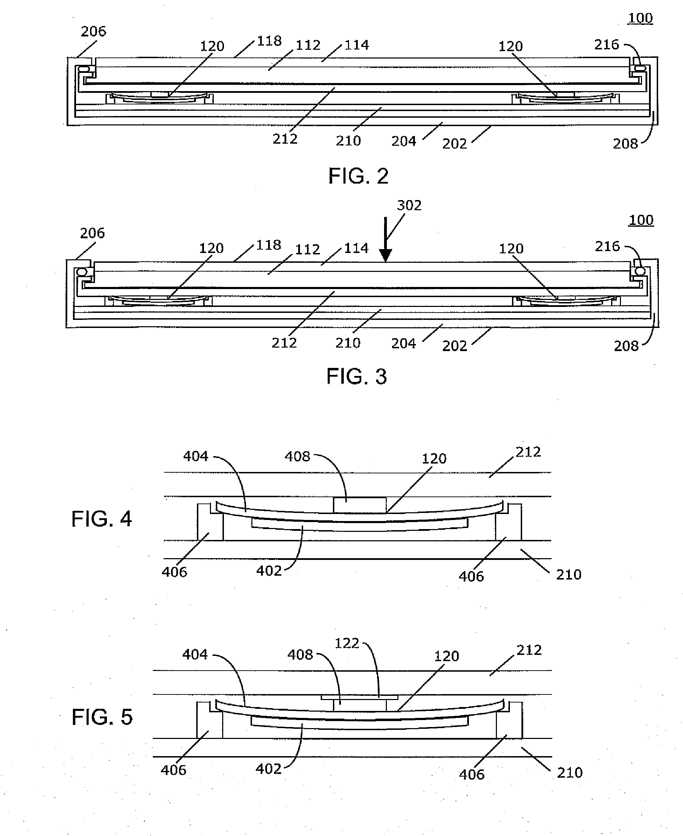

A cross section of a portable electronic device 100 taken through the centers of piezoelectric ("piezo") actuators 120 is shown in FIG. 2. The portable electronic device 100 includes a housing 202 that encloses components such as shown in FIG. 1. The housing 202 may include a back 204, sidewalls 208, and a frame 206 that houses the touch-sensitive display 118. A base 210 extends between the sidewalls 208, generally parallel to the back 204, and supports the actuators 120. The display 112 and the overlay 114 are supported on a support tray 212 of suitable material, such as magnesium. Optional spacers 216 may be located between the support tray 212 and the frame 206, may advantageously be flexible, and may also be compliant or compressible, and may comprise gel pads, spring elements such as leaf springs, foam, and so forth.

The touch-sensitive display 118 is moveable and depressible with respect to the housing 202. A force 302 applied to the touch-sensitive display 118 moves, or depresses, the touch-sensitive display 118 toward the base 210. When sufficient force is applied, the actuator 120 is depressed or actuated as shown in FIG. 3. The touch-sensitive display 118 may also pivot within the housing to depress the actuator 120. The actuators 120 may be actuated by pressing anywhere on the touch-sensitive display 118. The processor 102 receives a signal when the actuator 120 is depressed or actuated.

A cross section taken through the center of a piezo actuator 120 is shown in FIG. 4. The actuator 120 may comprise one or more piezo devices or elements 402. The piezo actuator 120 is shown disposed between the base 210 and the touch-sensitive display 118. The piezo actuator 120 includes a piezoelectric element 402, such as a piezoelectric ceramic disk, fastened to a substrate 404, for example, by adhesive, lamination, laser welding, and/or by other suitable fastening method or device. The piezoelectric material may be lead zirconate titanate or any other suitable material. Although the piezo element 402 is a ceramic disk in this example, the piezoelectric material may have any suitable shape and geometrical features, for example a non-constant thickness, chosen to meet desired specifications.

The substrate 404, which may also be referred to as a shim, may be comprised of a metal, such as nickel, or any other suitable material such as, for example, stainless steel, brass, and so forth. The substrate 404 bends when the piezo element 402 contracts diametrically, as a result of build up of charge at the piezo element 402 or in response to a force, such as an external force applied to the touch-sensitive display 118.

The substrate 404 and piezo element 402 may be suspended or disposed on a support 406 such as a ring-shaped frame for supporting the piezo element 402 while permitting flexing of the piezo actuator 120 as shown in FIG. 4. The supports 406 may be disposed on the base 210 or may be part of or integrated with the base 210, which may be a printed circuit board. Optionally, the substrate 404 may rest on the base 210, and each actuator 120 may be disposed, suspended, or preloaded in an opening in the base 210. The actuator 120 is not fastened to the support 406 or the base 210 in these embodiments. The actuator 120 may optionally be fastened to the support 406 through any suitable method, such as adhesive or other bonding methods.

A pad 408 may be disposed between the piezo actuator 120 and the touch-sensitive display 118. The pad 408 in the present example is a compressible element that may provide at least minimal shock-absorbing or buffering protection and may comprise suitable material, such as a hard rubber, silicone, and/or polyester, and/or other materials. The pad 408 is advantageously flexible and resilient and may provide a bumper or cushion for the piezo actuator 120 as well as facilitate actuation of the piezo actuator 120 and/or one or more force sensors 122 that may be disposed between the piezo actuators 120 and the touch-sensitive display 118. When the touch-sensitive display 118 is depressed, the force sensor 122 generates a force signal that is received and interpreted by the microprocessor 102. The pad 408 may be advantageously aligned with an optional force sensor 122 to facilitate the transfer or focus of forces exerted on the touch-sensitive display 118 onto the force sensors 122. The pads 408 transfer forces between the touch-sensitive display 118 and the actuators 120 whether the force sensors 122 are above or below the pads 408. The pads 408 facilitate provision of tactile feedback from the actuators 120 to the touch-sensitive display 118 without substantially dampening the force applied to or on the touch-sensitive display 118.

The optional force sensor 122 may be disposed between the piezo actuator 120 and the touch-sensitive display 118 as shown in FIG. 5. The force sensor 122 may be disposed between the touch-sensitive display 118 and the pad 408 or between the pad and the piezo actuator 120, to name a few examples. The force sensors 122 may be force-sensitive resistors, strain gauges, piezoelectric or piezoresistive devices, pressure sensors, quantum tunneling composites, force-sensitive switches, or other suitable devices. Force as utilized throughout the specification, including the claims, refers to force measurements, estimates, and/or calculations, such as pressure, deformation, stress, strain, force density, force-area relationships, thrust, torque, and other effects that include force or related quantities. A piezoelectric device, which may be the piezo element 402, may be utilized as a force sensor.

Force information related to a detected touch may be utilized to select information, such as information associated with a location of a touch. For example, a touch that does not meet a force threshold may highlight a selection option, whereas a touch that meets a force threshold may select or input that selection option. A value meets a threshold when the value is at or beyond the threshold. The input of the selection option is typically processed by the processor 102. The force threshold may be determined by a force sensor, by a force that actuates an actuator, or other force determination device. Selection options include selectable features such as displayed or virtual keys of a keyboard; selection boxes or windows, e.g., "cancel," "delete," or "unlock"; function buttons, such as play or stop on a music player; icons, representing applications or other features, and so forth. Different magnitudes of force may be associated with different functions or input. For example, a lesser force may result in panning, and a higher force may result in zooming.

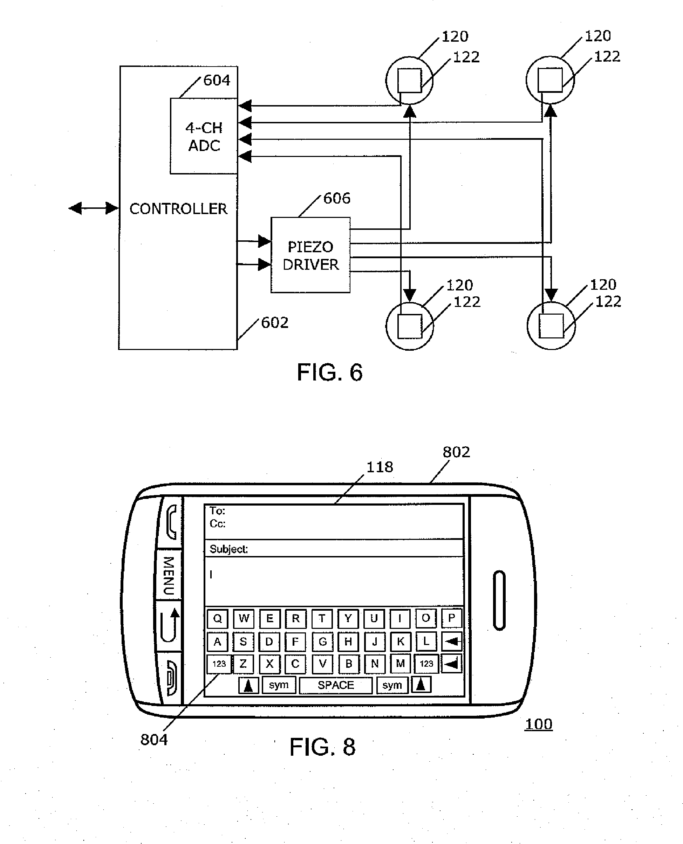

A block diagram including force sensors and actuators of the portable electronic device 100 is shown in FIG. 6. In this example, each force sensor 122 is electrically coupled to a controller 602, which includes an amplifier and analog-to-digital converter (ADC) 604. Each force sensor 122 may be, for example, a force-sensing resistor wherein the resistance changes as force applied to the force sensor 122 changes. As applied force on the touch-sensitive display 118 increases, the resistance decreases. This change is determined via the controller 116 for each of the force sensors 122, and a value representative of the force at each of the force sensors 122 may be determined.

The piezo actuators 120 are electrically coupled to a piezo driver 604 that communicates with the controller 602. The controller 602 is also in communication with the main processor 102 of the portable electronic device 100 and may exchange signals with the main processor 102. The piezo actuators 120 and the force sensors 122 are operatively coupled to the main processor 102 via the controller 602. The controller 602 controls the piezo driver 606 that controls the current/voltage to the piezoelectric devices 402 of the actuator 120, and thus the controller 602 controls the force applied by the piezo actuators 120 on the touch-sensitive display 118. The piezoelectric devices 402 may be controlled individually via a separate control line between each actuator 120 and the controller 602. Different signals may be sent to each different actuator 120. Alternatively, the piezoelectric devices 402 may be controlled substantially equally and concurrently, for example, by the same signal that may be provided through a common control line that extends to each actuator 120 or by individual control lines such as shown in FIG. 6.

The tactile feeling of switches, actuators, keys, other physical objects, textures, and so forth may be simulated, or a non-simulated tactile feedback may be provided by controlling the piezoelectric devices 402. For example, when a force applied on the touch-sensitive display 118 exceeds a depression threshold, the voltage/charge at the piezo actuators 120 is modified such that the piezo actuator 120 imparts a force on the touch-sensitive display 118, which force may, for example, simulate depression of a dome switch. When the force applied to the touch-sensitive display 118 falls below a release threshold, the voltage/charge at the piezo actuators 120 is modified such that the piezo actuator 120 imparts a force or discontinues imparting a force on the touch-sensitive display 118, which may, for example, simulate release of a dome switch.

The processor 102 generates and provides an actuation signal to the actuators 120 to provide tactile feedback to the touch-sensitive display 118. The actuation signal may be generated and tactile feedback may be provided in response to detected input from the touch-sensitive display 118. The actuators 120 may be controlled to provide different tactile feedback and the intensity and duration of the feedback may be varied.

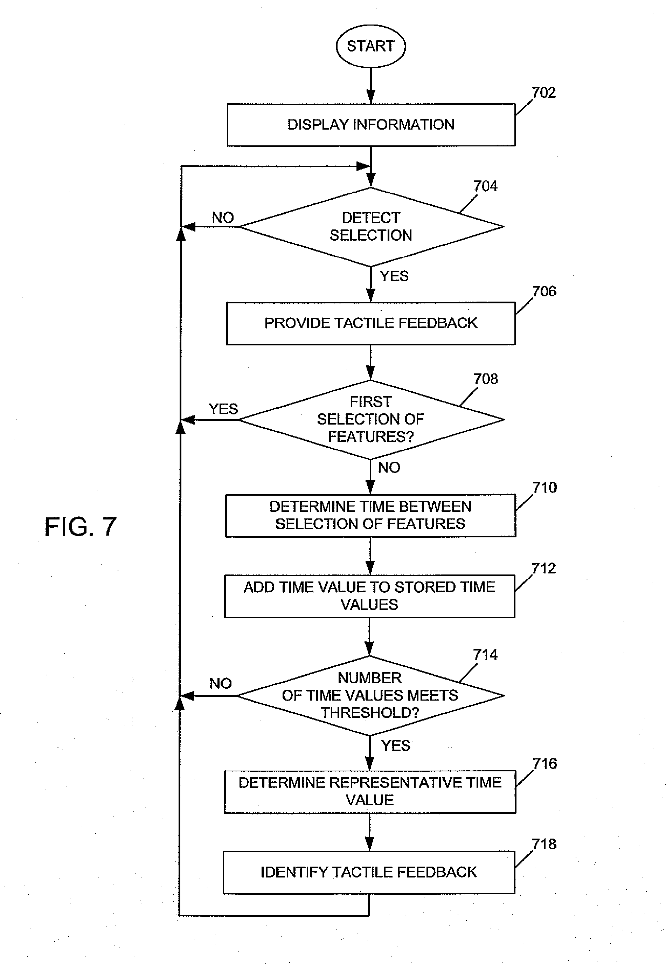

A flowchart illustrating a method of providing tactile feedback for a touch-sensitive display of an electronic device is shown in FIG. 7. The method may be carried out by software executed, for example, by the processor 102. Coding of software for carrying out such a method is within the scope of a person of ordinary skill in the art given the present description. The method may contain additional or fewer processes than shown and/or described, and may be performed in a different order. Computer-readable code executable by at least one processor of the portable electronic device to perform the method may be stored in a computer-readable medium.

Information is displayed 702 on the touch-sensitive display 118. The information may include selectable features such as keys of a keyboard, or any other suitable selectable features.

When selection of a selectable feature is detected 704, the process continues at 706. A selectable feature may be selected when a touch at a location associated with the selectable feature meets the force threshold.

Tactile feedback is provided 706 by actuating the actuators 120. The tactile feedback may be any suitable tactile feedback, for example, to simulate the tactile feeling of a switch, key, other physical object. For example, the tactile feedback may simulate depression of a dome switch. Release of the dome switch may also be simulated when the applied force on the touch-sensitive display 118 falls below a release threshold.

When the selection is a first selection of the features displayed on the touch-sensitive display at 708, the process returns to 704. When the selection is not a first selection, the process continues at 710. Thus, when a previous selection of the features displayed on the touch-sensitive display 118 has been received, the process continues at 710.

A value of time between two successive selections, including the current selection and the previous selection, is determined at 710. The value of time may be the length of the time period between detecting that the force threshold is met for two consecutive touches.

The value of time is stored 712, for example, in a buffer, and each of the values may be stored, for example, along with a time at which the value is determined or stored, also referred to as a time stamp. The values of time stored may be limited in number. For example, 20 time values may be stored. When a new value of time is stored, the oldest value of time stored in the buffer may be deleted. Alternatively, counts of times that fall within ranges may be stored, for example, as columns in a graph. The count is incremented by 1 when a time value falls within the range.

When the number of stored time values meets a threshold at 714, a representative time value is determined at 716. The representative time value may be, for example, a statistical representation such as an average time value, which may be a mean time value or a median time value. Alternatively, the representative time value may be determined based on a probability distribution, a cumulative distribution function, or any other suitable function, calculation, or method. The threshold may be any suitable number for obtaining a representative value and may be, for example, equal to the maximum number of values stored in the buffer.

Tactile feedback is identified 718 based on the representative time value. Different tactile feedback may be identified for different representative time values. The tactile feedback differs in duration such that tactile feedback of shorter duration is provided for values representative of shorter time periods. The intensity of tactile feedback may also vary. For example, the intensity of tactile feedback may be less for values representative of shorter time periods than for values representative of longer time periods. A plurality of different tactile feedback may be selected such that different durations and/or intensities of tactile feedback may be selected from to provide the greatest duration and intensity suitable for the representative time value. When a subsequent selection is detected, the identified feedback is provided.

A front view of an example of the electronic device 100 is shown in FIG. 8. The electronic device 100 includes a housing 802 in which the touch-sensitive display 118 is disposed. The housing 802 and the touch-sensitive display 118 enclose components such as the components shown in FIG. 1. In the example of FIG. 8, a keyboard 804 is displayed on the touch-sensitive display 118.

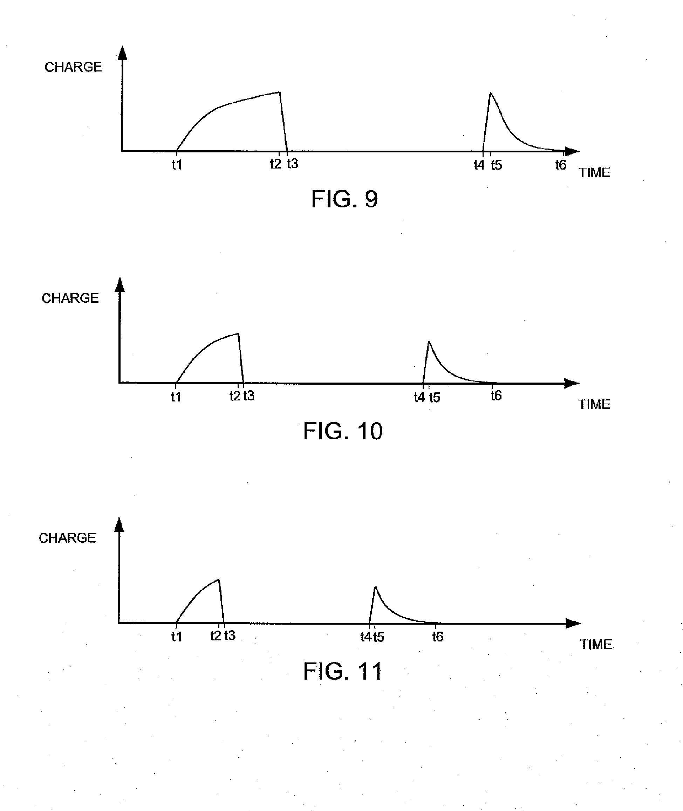

When selection of a key of the keyboard 804 is detected, tactile feedback is provided. The tactile feedback may include simulation of depression of a dome switch followed by simulation of release of the dome switch. FIG. 9 illustrates one example of a graph of tactile feedback. The graph illustrates charge at the piezo actuators 120 over time. The force imparted to the touch-sensitive display 118 by the actuators 120 is related to the voltage/charge at the piezo actuators 120. The voltage/charge is modified by increasing the voltage/charge over a ramp-up period of time between t1 and t2, followed by a decrease in voltage/charge to simulate collapse over a collapse period of time between t2 and t3. The voltage/charge is also modified by increasing the voltage/charge to simulate release over a release period of time between t4 and t5, followed by a decreasing the voltage/charge over a ramp-down period of time between t5 and t6.

A value of time is added to the stored time values for pairs of consecutive selections during typing utilizing the keyboard 804. When, for example, 20 time values, are stored, a representative value, such as an average time value is determined and tactile feedback is identified based on the average time value. For the purpose of the present example, tactile feedback is identified by selecting one of three groups of actuation signals based on the average time value. Three examples of tactile feedback are illustrated in FIG. 9, FIG. 10, and FIG. 11.

In the example illustrated FIG. 10, the ramp-up period of time between t1 and t2 is shorter and the maximum voltage/charge at the piezo actuators 120 is less than the tactile feedback illustrated in FIG. 9, resulting in less force imparted on the touch-sensitive display 118 and less intense tactile feedback. The release period of time between t4 and t5 and the ramp-down period of time between t5 and t6 is also shorter and the maximum voltage/charge at the piezo actuators 120 in these time periods is less than the maximum voltage/charge at the piezo actuators 120 during the tactile feedback illustrated in FIG. 9.

In the example illustrated FIG. 11, the ramp-up period of time between t1 and t2 is shorter and the maximum voltage/charge at the piezo actuators 120 is less than the tactile feedback illustrated in FIG. 10, resulting in less force imparted on the touch-sensitive display 118 and less intense tactile feedback. The release period of time between t4 and t5 and the ramp-down period of time between t5 and t6 is also shorter and the maximum voltage/charge at the piezo actuators 120 is less than the maximum voltage/charge at the piezo actuators 120 during the tactile feedback illustrated in FIG. 10.

The example of tactile feedback that is identified is dependent on the representative time value. For example, an average time value that meets a threshold value of 1 second may result in identification of the tactile feedback illustrated in FIG. 9. An average time value that is less than a threshold value of 0.5 seconds may result in identification of the tactile feedback illustrated in FIG. 11. An average time value that meets a threshold of 0.5 seconds but does not meet the threshold of 1 second may result in identification of the tactile feedback illustrated in FIG. 10. When a subsequent selection of a key of the keyboard 804 is detected, the identified tactile feedback is provided.

Alternatively, tactile feedback may be identified by modifying the tactile feedback based on the value of time. For example, the tactile feedback illustrated in FIG. 9 may be utilized and may be modified based on the representative value of time. With decreasing values of time, the tactile feedback may be modified by, for example, truncating the ramp-up period of time from t1 to t2 and decreasing the maximum voltage/charge at the piezo actuators 120, thereby decreasing the intensity of tactile feedback. The ramp down period of time from t5 to t6 may also be truncated. In this example, small modifications may be made to the tactile feedback based on the typing speed of the user.

Alternatively, different waveforms may be utilized based on the value of time rather than truncating the ramp-up or ramp-down period of times.

Tactile feedback that is provided may be modified based on speed of entry of successive selectable features such that tactile feedback is timely provided. For example, greater intensity tactile feedback may be provided to a slow typist compared to the intensity of tactile feedback provided to a very quick typist. The intensity of tactile feedback is decreased for very quick typing to decrease the time utilized to provide the tactile feedback. High quality or desirable tactile feedback may be provided when sufficient time exists between entry of selectable features and intensity and time may be decreased when less time exists between entry of selectable features.

The present disclosure may be embodied in other specific forms without departing from its spirit or essential characteristics. The described embodiments are to be considered in all respects only as illustrative and not restrictive. The scope of the present disclosure is, therefore, indicated by the appended claims rather than by the foregoing description. All changes that come within the meaning and range of equivalency of the claims are to be embraced within their scope.

## Claims

1. A method comprising:
determining a time between selections utilizing a touch-sensitive display;
identifying a tactile feedback based on the time;
providing the tactile feedback in response to a subsequent selection utilizing the touch-sensitive display.

2. The method according to claim 1, wherein identifying the tactile feedback comprises identifying one of a plurality of tactile and wherein the length of time to charge and discharge the actuator differs between the tactile feedback.

3. The method according to claim 1, wherein identifying the tactile feedback comprises identifying one of a plurality of tactile feedbacks and wherein the maximum force imparted by an actuator on the touch-sensitive display differs between the tactile feedbacks.

4. The method according to claim 1, wherein determining the time comprises determining an average time between selections.

5. The method according to claim 1, wherein identifying the tactile feedback comprises identifying a first tactile feedback when the time does not meet a threshold and identifying a second tactile feedback when the time meets the threshold.

6. The method according to claim 1, wherein identifying the tactile feedback comprises comparing the time to at least two threshold values and identifying the tactile feedback based on which of the at least two threshold values are met.

7. The method according to claim 1, wherein providing the tactile feedback comprises actuating an actuator to impart a force on the touch-sensitive display.

8. The method according to claim 1, wherein the period of time during which the tactile feedback is provided is dependent on the time between selections.

9. The method according to claim 1, wherein determining the time between selections comprises determining the time between successive selections by determining the period of time between meeting a threshold force for a first selection and meeting the threshold force for a second selection.

10. The method according to claim 1, wherein determining the time between selections comprises determining a representative time based on a plurality of selections.

11. The method according to claim 1, wherein the time between selections is determined when a threshold number of time values are collected.

12. The method according to claim 1, wherein a force imparted by an actuator to provide the tactile feedback is dependent on the time between selections.

13. The method according to claim 1, wherein a force imparted by an actuator to provide the tactile feedback decreases with decreasing time between selections.

14. A computer-readable medium having computer-readable code executable by at least one processor of the electronic device to perform the method of claim 1.

15. An electronic device comprising:
a touch-sensitive display;
at least one actuator arranged to impart force on the touch-sensitive display to provide at least one tactile feedback;
at least one processor operably coupled to the touch-sensitive display and to the actuator to determine time between selections utilizing the touch-sensitive display, identify the tactile feedback based on the time, and provide the tactile feedback in response to a subsequent selection utilizing the touch-sensitive display.
